(19) Europäisches Patentamt
European Patent Office
Office européen des brevets

(11) **EP 3 276 065 A1**

(12) **EUROPEAN PATENT APPLICATION**
published in accordance with Art. 153(4) EPC

(43) Date of publication:
**31.01.2018 Bulletin 2018/05**

(21) Application number: **16767761.6**

(22) Date of filing: **23.03.2016**

(51) Int Cl.:
*D06F 33/02* (2006.01)     *D06F 33/00* (2006.01)

(86) International application number:
**PCT/CN2016/077121**

(87) International publication number:
**WO 2016/150384 (29.09.2016 Gazette 2016/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.03.2015 JP 2015063081**

(71) Applicants:
• **Qingdao Haier Washing Machine Co., Ltd.**
**Shandong 266101 (CN)**
• **Aqua Co., Ltd.**
**Chiyoda-ku**
**Tokyo 100-0005 (JP)**

(72) Inventor: **MAMIYA, Haruo**
**Tokyo 100-0005 (JP)**

(74) Representative: **Zacco Sweden AB**
**P.O. Box 5581**
**114 85 Stockholm (SE)**

(54) **WASHING MACHINE**

(57)     Disclosed is a washing machine capable of inhibiting generation of damage during washing operation and cleaning efficiently no matter whether washings are delicate or not delicate. The washing machine (1) includes a washing drum (4), a stirring component (5) which is rotatable and is for stirring washings (Q) in the washing drum (4), a motor (6) for rotating the stirring component (5), and a microcomputer (30) for supplying water to the washing drum (4) or controlling rotation of the motor (6). When a selection of a soft wash mode different from a standard mode and a delicate mode in a plurality of modes set for the washing operation is received, the microcomputer (30) rotates the stirring component (5) intermittently through a washing process of the soft wash mode in operation conditions that volume of water in the washing drum (4) is greater than that in the standard mode, a maximum rotating speed of the motor (6) is lower than that in the standard mode and higher than that in the delicate mode, and a duration, in which the motor (6) is rotated in each period in which the stirring component (5) is rotated intermittently, is longer than that in the standard mode.

**FIG. 1**

**Description**

**TECHNICAL FIELD**

The present invention relates to a washing machine.

**BACKGROUND**

In a washing machine recorded in the following patent literature 1, a rotating wing is arranged at a bottom of a washing drum in which clothes and other washings are stored; and the rotating wing is rotated by a driving motor connected via a power transmission mechanism. When wool, silk and other delicate washings easy to be damaged are washed, a rotating speed of the driving motor is reduced in most cases; and the speed is changed halfway. Thus, since washings in the washing drum are exchanged with each other in position due to a turbulent flow generated in the washing drum, the delicate washings can be cleaned gently and evenly.

Current Technical Literature

Patent Literature

Patent Literature 1: Japanese Laid-Open Patent Publication No. 4-3998

Problems to be solved in invention

Recently, clothes are generally washed after wearing every time rather than in the case of becoming dirty. Thus, the frequency of washing the same clothes by the washing machine is increased, but for example when favorite clothes are washed, it is desired that damage is inhibited as much as possible so that the clothes can be worn longer. It should be noted that even if the clothes are worn only once, the clothes are in a dirty state to a certain extent due to attachment of sweat and the like. As long as the clothes are washed in a mode for washing the delicate washings disclosed in the patent literature 1, the damage to the clothes can be inhibited as much as possible. However, when the clothes are not delicate but relatively durable, a cleaning effect for washing in the mode is relatively poor; and a risk that dirt is difficult to be effectively removed from the clothes exists. Nevertheless, when the washing machine washes in a standard mode selected as a general washing operation, the risk that the damage is difficult to be inhibited exists even if the washed washings are non-delicate washings.

**SUMMARY**

The present invention is completed under the background, and aims to provide a washing machine capable of inhibiting generation of damage during washing operation and cleaning efficiently no matter whether washings are delicate or not delicate.

Solutions for solving problems

The washing machine of the present invention includes: a washing drum, for accommodating washings; a stirring component, which is rotatable and is for stirring washings in the washing drum; a motor, for rotating the stirring component;
an execution unit, for supplying water to the washing drum or controlling rotation of the motor to rotate or stop the stirring component, wherein the execution unit executes a washing operation including a washing process in which the stirring component is rotated periodically and intermittently in such a state that water is stored in the washing drum; and a receiving unit, for receiving selection of a plurality of modes set in the washing operation. The plurality of modes include a standard mode and a delicate mode, wherein a maximum rotating speed of the motor in the washing process in the delicate mode is set to be lower than that in the standard mode so as to wash washings more delicate than washings washed in the standard mode; and when the receiving unit receives selection of a specified mode different from the standard mode and the delicate mode in the plurality of modes, the execution unit rotates the stirring component intermittently in the washing process in operation conditions that volume of water in the washing drum is greater than that in the standard mode, the maximum rotating speed of the motor is lower than that in the standard mode and higher than that in the delicate mode, and a duration, in which the motor is rotated in each period in which the stirring component is rotated intermittently, is longer than that in the standard mode.
In addition, through the present invention, the execution unit rotates the stirring component intermittently in the washing process of the specified mode in an operation condition that a duration, in which the motor stops rotating in each period in which the stirring component is rotated intermittently, is longer than that in the standard mode.

In addition, through the present invention, the execution unit rotates the stirring component intermittently in the washing process of the specified mode in an operation condition that an acceleration of the motor is lower than that in the standard mode until the maximum rotating speed of each period in which the stirring component is rotated intermittently.

In addition, in the present invention, the washing drum is rotatable; the motor is capable of rotating the washing drum; the washing operation includes a dewatering process that the execution unit controls rotation of the motor to rotate the washing drum after the washing process; and the execution unit rotates the washing drum in the dewatering process of the specified mode in an operation condition that the maximum rotating speed of the motor is lower than that in the standard mode.

Effects of invention

According to the present invention, in the washing process of the washing operation of the washing machine, the execution unit controls the rotation of the motor in such a state that water is stored in the washing drum so that the stirring component is rotated periodically and intermittently. Thus, a water flow is generated in the washing drum. Washings are stirred by a mechanical force generated by the intermittently rotated stirring component and the water flow, thereby removing dirt from the washings to clean the washings.

A plurality of modes are set for the washing operation. The modes include a general standard mode and a delicate mode in which the maximum rotating speed of the motor is set to be lower than that in the standard mode in the washing process for washing the delicate washings. In the case of the delicate washings, a situation of damage during the washing operation can be inhibited, and the cleaning is performed efficiently through the delicate mode with weak mechanical force.

On the other hand, for non-delicate washings which may be damaged when being washed in the standard mode but cannot be cleaned effectively when being washed in the delicate mode, the specified mode different from the standard mode and the delicate mode can be selected. In the case of selecting the specified mode, the execution unit rotates the stirring component intermittently under predetermined operation conditions in the washing process of the specified mode.

Under the operation conditions, the volume of water in the washing drum is set to be higher than that in the standard mode. Thus, in the washing drum, washings can be inhibited from rubbing against each other due to a large amount of accumulated water, thereby inhibiting the damage to the washings. In addition, under the operation conditions, since the maximum rotating speed of the motor is lower than that in the standard mode and is higher than that in the delicate mode, the mechanical force applied to the washings is weaker than that in the standard mode and stronger than that in the delicate mode. Thus, a situation that the washings may be damaged when being washed in the standard mode can be inhibited; and the washings can be cleaned more efficiently than the delicate mode. In addition, under the operation conditions, since the duration, in which the motor is rotated in each period in which the stirring component is rotated intermittently, is longer than that in the standard mode, the washings in the washing drum are promoted to be exchanged with each other in position by the rotation of the stirring component in the duration. Thus, the washings can be cleaned efficiently.

In addition, through the present invention, under the operation condition that the stirring component is rotated intermittently in the washing process of the specified mode, since the duration, in which the motor stops rotating in each period in which the stirring component is rotated intermittently, is longer than that in the standard mode, the mechanical force applied to the washings is weaker than that in the standard mode. In addition, a detergent can be effectively permeated to the washings in such a prolonged duration. Therefore, the situation that the washings are damaged can be inhibited, and the washings can be cleaned efficiently through the washing process of the specified mode.

In addition, through the present invention, under the operation condition that the stirring component is rotated intermittently in the washing process of the specified mode, since the acceleration of the motor is lower than that in the standard mode until the maximum rotating speed of each period in which the stirring component is rotated intermittently, the mechanical force applied to the washings in an acceleration process of the motor is weaker than that in the standard mode. Therefore, the situation that the washings are damaged can be inhibited through the washing process of the specified mode.

In addition, through the present invention, in the dewatering process of the specified mode, the execution unit rotates the washing drum in an operation condition that the maximum rotating speed of the motor is lower than that in the standard mode. In this case, a force applied to the washings during the rotation of the motor in the dewatering process is weaker than that in the standard mode. Therefore, the situation that the washings are damaged can be inhibited through the dewatering process of the specified mode.

## BRIEF DESCRIPTION OF DRAWINGS

Fig. 1 is a schematic longitudinal sectional right view illustrating a washing machine of an embodiment of the present invention;

Fig. 2 is a block diagram illustrating an electrical structure of a washing machine;

Fig. 3 is a flow chart illustrating a control action for a washing operation;

Fig. 4 is a sequence diagram illustrating a rotating speed of a motor in a washing process;

Fig. 5 is a table for summarizing data about a washing process in a standard mode;

Fig. 6 is a table after summarizing data relevant to a washing process in a soft wash mode;

Fig. 7 is a table after summarizing data relevant to a washing process in a delicate mode;

Fig. 8 is a graph illustrating a relationship between a load capacity and each of a total cumulative area ratio and a maximum rotating speed ratio in a washing process; and

Fig. 9 is a sequence diagram illustrating a rotating speed of a motor, an operation/stop-operation state of the motor and an operating/non-operating state of a water supply valve after a washing process.

## DETAILED DESCRIPTION

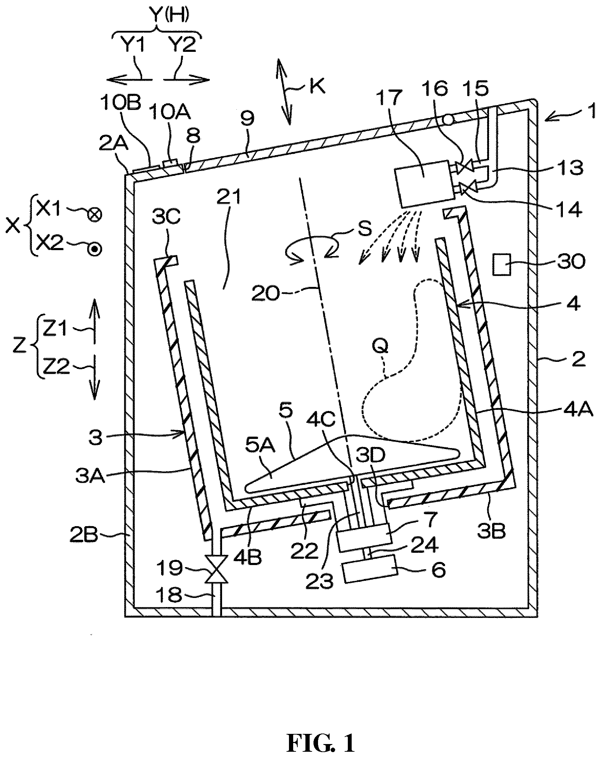

Hereinafter, embodiments of the present invention are described in detail with reference to the drawings. Fig. 1 is a schematic longitudinal sectional right view illustrating a washing machine 1 of an embodiment of the present invention. An up-down direction in Fig. 1 is referred to as an up-down direction Z of the washing machine 1. A left-right direction in Fig. 1 is referred to as a front-rear direction Y of the washing machine 1. A direction perpendicular to a paper surface in Fig. 1 is referred as a left-right direction X. Firstly, an outline of the washing machine 1 is described. In the up-down direction Z, an upper side is referred to as an upper side Z1 and a lower side is referred to as a lower side Z2. In the front-rear direction Y, a left side in Fig. 1 is referred to as a front side Y1 and a right side in Fig. 1 is referred to as a rear side Y2. In the left-right direction X, a back side of the paper surface in Fig. 1 is referred as a left side X1, and a surface side of the paper surface in Fig. 1 is referred as a right side X2.

Although the washing machine 1 also includes a washing and drying machine having a drying function, the washing machine 1 will be described by taking the washing machine which omits the drying function and only performs washing operation as an example. The washing machine 1 includes a housing 2, an outer drum 3, a washing drum 4, a stirring component 5, an electric motor 6 and a transmission mechanism 7.

The housing 2 is made of, for example, metal, and has a box shape. An upper surface 2A of the housing 2 is formed by inclining relative to a horizontal direction H, for example, in a manner of extending toward the upper side Z1 when getting closer to the rear side Y2. An opening 8 communicated with the interior and the exterior of the housing 2 is formed in the upper surface 2A. A door 9 for opening and closing the opening 8 is arranged on the upper surface 2A. An operation part 10A as a receiving and transmitting unit composed of a switch and the like, and a display part 10B composed of a liquid crystal panel and the like are arranged in a region around the opening 8 on the upper surface 2A. In Fig. 1, the operation part 10A and the display part 10B are configured to be closer to the front side Y1 than the opening 8, but can also be configured, for example, to be closer to the right side X2 than the opening 8. A user can freely select operation conditions of the washing operation or can issue washing operation starting, washing operation stopping and other instructions to the washing machine 1 by operating the operation part 10A. The display part 10B displays information relevant to the washing operation in a visible manner.

The outer drum 3 is made of, for example, resin, and has a bottomed cylindrical shape. The outer drum 3 includes: a circumferential wall 3A which is of a substantially cylindrical shape and is configured in an inclination direction K of inclining to the front side Y1 relative to the up-down direction Z; a bottom wall 3B, which blocks a hollow portion of the circumferential wall 3A from the lower side Z2; and an annular wall 3C, which is of an annular shape and is protruded to a circle center side of the circumferential wall 3A while trimming an end edge of an upper side Z1 of the circumferential wall 3A. The inclination direction K not only is inclined relative to the up-down direction Z, but also is inclined relative to a horizontal direction H. The hollow portion of the circumferential wall 3A is exposed from an inner side of the annular wall 3C to the upper side Z1. The bottom wall 3B is formed in a circular plate shape which is orthogonal to the inclination direction K and obliquely extends relative to the horizontal direction H. A through hole 3D penetrating through the bottom wall 3B is formed in a circle center position of the bottom wall 3B. A front wall 2B of the housing 2 is formed in a manner of extending to the up-down direction Z in Fig. 1 and can also be formed in a manner of extending to the inclination direction K along a front side portion of the circumferential wall 3A.

The outer drum 3 can store water. For example, a box-shaped detergent storage chamber 17 is configured in the upper side Z1 of the outer drum 3 in the housing 2. The detergent storage chamber 17 is connected with a water supply path 13 connected with a faucet (not shown) from the upper side Z1 and from the rear side Y2, so the water is supplied into the outer drum 3 from the water supply path 13 through the detergent storage chamber 17. The water from the detergent storage chamber 17 can also be supplied into the outer drum 3 by flowing down in a manner of splashing water as shown by dotted arrows. A water supply valve 14 opened and closed for a purpose of starting or stopping water supply is arranged in the middle of the water supply path 13.

The detergent storage chamber 17 is further connected with a branch path 15. The branch path 15 is branched from a portion of the water supply path 13 closer to an upstream side of the faucet than the water supply valve 14. The water flows into the branch path 15 from the water supply path 13 and then is supplied into the outer drum 3 from the branch path 15 through the detergent storage chamber 17. A softener supply valve 16 opened and closed for a purpose of starting or stopping the water supply is arranged in the middle of the branch path 15. The interior of the detergent storage chamber 17 is divided into a first region (not shown) for accommodating a softener and a second region (not shown) without accommodating the softener. When the softener supply valve 16 is opened, the water flowing from the water supply path 13 into the branch path 15 passes through the first region of the detergent storage chamber 17 and then is supplied into the outer drum 3. Thus, the softener in the detergent storage chamber 17 is mixed with the water and is supplied into the outer drum 3. On the other hand, when the water supply valve 14 is opened, the water directly flowing from the water supply path 13 passes through the second region of the detergent storage chamber 17 and then is supplied into the outer drum 3. In this case, the water in a state that the softener is not mixed is supplied into the outer drum 3.

The outer drum 3 is connected with a drainage path 18 from the lower side Z2. The water in the outer drum 3 is discharged out of a machine from the drainage path 18. A drain valve 19 opened and closed for a purpose of starting or stopping drainage is arranged in the middle of the drainage path 18.

The washing drum 4 is made of, for example, metal, has a central axis 20 extending toward the inclination direction K, is formed in a bottomed cylindrical shape which is a circle smaller than the outer drum 3, and can accommodate the washings Q inside. The washing drum 4 has a substantially cylindrical circumferential wall 4A configured along the inclination direction K and a bottom wall 4B for blocking the hollow portion of the circumferential wall 4A from the lower side Z2.

An inner circumferential surface of the circumferential wall 4A is the inner circumferential surface of the washing drum 4. An upper end portion of the inner circumferential surface of the circumferential wall 4A is an inlet/outlet 21 for exposing the hollow portion of the circumferential wall 4A to the upper side Z1. The inlet/outlet 21 is opposed to an inner side region of the annular wall 3C of the outer drum 3 from the lower side Z2 and is in a state of communicating with the opening 8 of the housing 2 from the lower side Z2. The user of the washing machine 1 takes the washings Q into and out of the washing drum 4 through the opening 8 which is opened and the inlet/outlet 21.

The washing drum 4 is coaxially accommodated in the outer drum 3 and is obliquely configured relative to the up-down direction Z and the horizontal direction H. The washing drum 4 accommodated in the outer drum 3 can be rotated about the central axis 20. A plurality of through holes (not shown) are formed in the circumferential wall 4A and the bottom wall 4B of the washing drum 4. The water in the outer drum 3 can flow between the outer drum 3 and the washing drum 4 through the through holes. Therefore, a water level in the outer drum 3 coincides with a water level in the washing drum 4. In addition, the water flowing out of the detergent storage chamber 17 is directly supplied into the washing drum 4 from the upper side Z1 through the inlet/outlet 21 of the washing drum 4.

The bottom wall 4B of the washing drum 4 is formed in a circular plate shape extending substantially parallel to the bottom wall 3B of the outer drum 3 at intervals in the upper side Z1. A through hole 4C penetrating through the bottom wall 4B is formed in a circle center position of the bottom wall 4B coinciding with the central axis 20. A tubular supporting shaft 22 surrounding the through hole 4C and extending to the lower side Z2 along the central axis 20 is arranged on the bottom wall 4B. The supporting shaft 22 is inserted into the through hole 3D of the bottom wall 3B of the outer drum 3. A lower end portion of the supporting shaft 22 is located at the lower side Z2 of the bottom wall 3B.

The stirring component 5, i.e., an impeller, is formed in a disc shape using the central axis 20 as a circle center, and is configured to be concentric with the washing drum 4 along the bottom wall 4B in the washing drum 4. A plurality of radially configured blades 5A are arranged on the upper surface of the stirring component 5 facing the inlet/outlet 21 of the washing drum 4 from the lower side Z2. A rotating shaft 23 extending from the circle enter to the lower side Z2 along the central axis 20 is arranged on the stirring component 5. The rotating shaft 23 is inserted into the hollow portion of the supporting shaft 22. The lower end portion of the rotating shaft 23 is located at the lower side Z2 of the bottom wall 3B of the outer drum 3.

In the present embodiment, the motor 6 is configured as a variable frequency motor. The motor 6 is configured at the lower side Z2 of the outer drum 3 in the housing 2. The motor 6 has an output shaft 24 which rotates about the central axis 20 as the center. The transmission mechanism 7 is clamped between a lower end portion of each of the supporting shaft 22 and the rotating shaft 23 and an upper end portion of the output shaft 24. The transmission mechanism 7 selectively transfers the driving force outputted from the output shaft 24 by the motor 6 to one of or both of the supporting shaft 22 and the rotating shaft 23. A well-known transmission mechanism can be used as the transmission mechanism 7.

When the driving force from the motor 6 is transferred to the supporting shaft 22 and the rotating shaft 23, the washing drum 4 and the stirring component 5 are rotated about the central axis 20. Rotating directions of the washing drum 4 and the stirring component 5 coincide with a circumferential direction S of the washing drum 4.

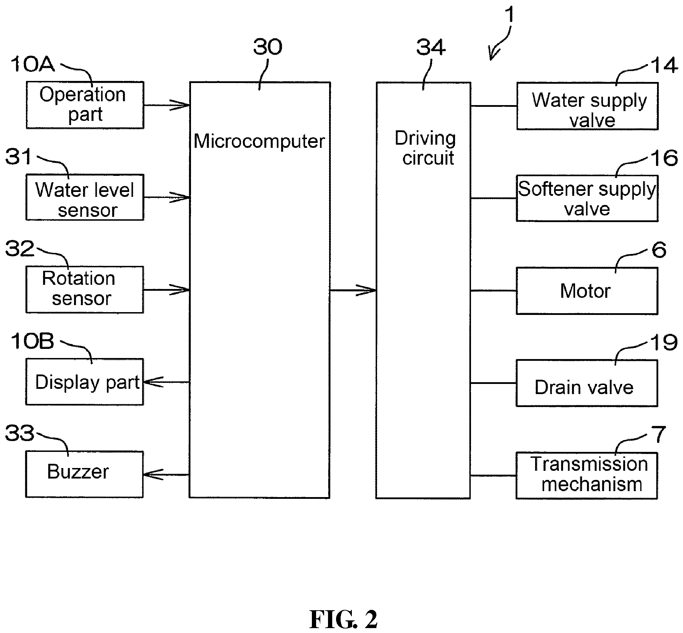

Fig. 2 is a block diagram illustrating an electrical structure of the washing machine 1. By reference to Fig. 2, the washing machine 1 includes a microcomputer 30 serving as the execution unit and the receiving and transmitting unit. The microcomputer 30 includes, for example, a CPU and a memory portion such as an ROM, an RAM, etc., and is configured in the housing 2 (by referring to Fig. 1).

The washing machine 1 further includes a water level sensor 31, a rotation sensor 32 and a buzzer 33. The water level sensor 31, the rotation sensor 32 and the buzzer 33 as well as the above operation part 10A and the display part 10B are electrically connected with the microcomputer 30 respectively. The motor 6, the transmission mechanism 7, the water supply valve 14, the softener supply valve 16 and the drain valve 19 are electrically connected with the microcomputer 30 through a driving circuit 34 respectively.

The water level sensor 31 is a sensor for detecting water levels of the outer drum 3 and the washing drum 4, in other words, for detecting the volume of water in the washing drum 4. Detection results of the water level sensor 31 are inputted into the microcomputer 30 in real time.

The rotation sensor 32 is an apparatus for reading the rotating speed of the motor 6, strictly for reading the rotating speed of the output shaft 24 of the motor 6, and is composed of, for example, a plurality of Hall ICs (not shown). The rotating speed read by the rotation sensor 32 is inputted into the microcomputer 30 in real time. The microcomputer 30 controls the operation/stop-operation of the motor 6, specifically, controls a duty ratio of a voltage applied to the motor 6 according to the inputted rotating speed, and controls the rotation of the motor 6 in such a manner that the motor 6 is rotated at a desired rotating speed. In the present embodiment, the rotating speed of the motor 6 is the same as the rotating speed of each of the washing drum 4 and the stirring component 5. In addition, the microcomputer 30 can control the rotation direction of the motor 6. Therefore, the motor 6 can be rotated forward or backward. In the present embodiment, the rotation direction of the output shaft 24 of the motor 6 coincides with the rotation direction of each of the washing drum 4 and the stirring component 5. For example, when the motor 6 is rotated forward, the washing drum 4 and the stirring component 5 are rotated in a clockwise direction in top view as observed from the upper side Z1; and when the motor 6 is rotated backward, the washing drum 4 and the stirring component 5 are rotated in a counterclockwise direction in top view.

As described above, when the user operates the operation part 10A to select the operation conditions of the washing operation and the like, the microcomputer 30 receives the selection. The microcomputer 30 displays the desired information to the user through the display part 10B in the visible manner. The microcomputer 30 informs the user of the start, the end and the like of the washing operation by a predetermined sound emitted from the buzzer 33.

The microcomputer 30 switches a transferring target of the driving force of the motor 6 to one of or both of the supporting shaft 22 and the rotating shaft 23 by controlling the transmission mechanism 7. The microcomputer 30 controls the opening and closing of the water supply valve 14, the softener supply valve 16 and the drain valve 19. Thus, the microcomputer 30 can supply the water to the washing drum 4 by opening the water supply valve 14, can supply the softener to the washing drum 4 by opening the softener supply valve 16, and can perform the drainage of the washing drum 4 by opening the drain valve 19.

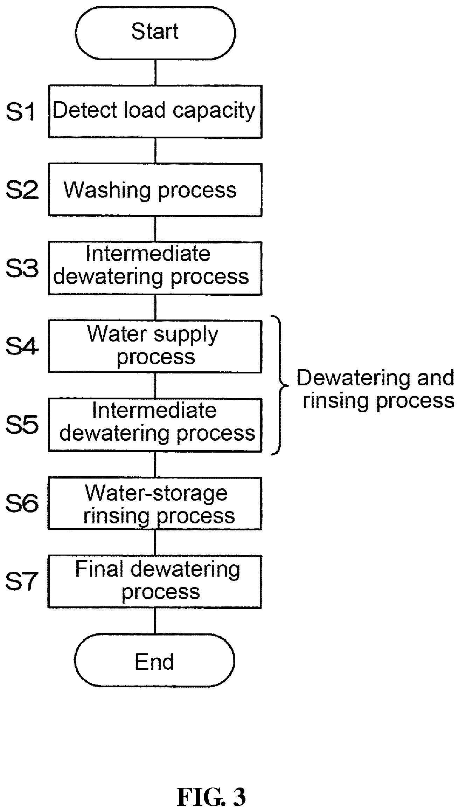

Next, the washing operation performed by the microcomputer 30 in the washing machine 1 will be described by reference to the flow chart of Fig. 3. The washing operation consists of the washing process of washing the washings Q, the rinsing process of rinsing the washings Q after the washing process, and a dewatering process of dewatering the washings Q. The dewatering process includes a final dewatering process performed at the end of the washing operation, and an intermediate dewatering process at least performed immediately after the washing process. It should be noted that the user can only use tap water and can also use bath water as needed in the washing operation.

A plurality of modes are set for the washing operation. The plurality of modes include a usually selected "standard mode", a "delicate mode", a specified mode, i.e., a "soft wash mode" different from the standard mode and delicate mode, and the like. The delicate mode is also referred to as a dry clean mode and is a mode set for washing the washings Q which are more easily damaged compared with the washings washed in the standard mode. Wool, silk and other beautiful clothes labelled with "hand wash" and "dry clean" can be taken as specific examples of the delicate washings Q as objects of the delicate mode.

The soft wash mode is a mode set for gently and more efficiently cleaning the washings Q, which are not delicate as the objects of the delicate mode but are likely to be damaged by washing repeatedly in the standard mode, than the delicate mode. Clothes labelled with "gentle wash", clothes which are less soiled and need to be washed gently in the non-delicate but favorite clothes, and the like can be taken as specific examples of the washings Q as objects of the soft wash mode.

A table 40 for summarizing the operation conditions of the standard mode, a table 41 for summarizing the operation conditions of the soft wash mode, and a table 42 for summarizing the operation conditions of the delicate mode are stored in the memory portion (not shown) arranged in the microcomputer 30.

The user of the washing machine 1 can select any one of the plurality of modes by operating the operation part 10A. The microcomputer 30 receives the selection of the mode corresponding to the operation part 10A operated by the user and performs the washing operation in the received mode.

The microcomputer 30 detects the amount of the washings Q in the washing drum 4 as the load capacity according to the start of the washing operation (step S1). Specifically, the microcomputer 30 detects the load capacity by fluctuating the rotating speed of the motor 6 when the washing drum 4 is stably rotated at a low speed. The unit of load capacity is kg. The microcomputer 30 displays the duration of the washing operation, a necessary amount of the detergent and the like corresponding to the detected load capacity on the display part 10B. In addition, the microcomputer 30 determines the operation conditions corresponding to the detected load capacity.

Next, the microcomputer 30 executes the washing process (step S2). In the washing process, the microcomputer 30 opens the water supply valve 14 in a state that the drain valve 19 is closed, and supplies the water to the washing drum 4. When the water is stored to the specified water level in the washing drum 4, the microcomputer 30 closes the water supply valve 14 and stops the water supply. Then, the microcomputer 30 controls the rotation of the motor 6 in a manner of alternately repeating operation and stop-operation in a state that the washing drum 4 is static in a specified washing duration, so that the stirring component 5 is rotated or stopped alternately. Thus, in the washing process, the stirring component 5 is rotated periodically and intermittently in a state that the water is stored to the specified volume of water in the washing drum 4. The washings Q in the washing drum 4 are stirred by the contact with the blades 5A of the intermittently rotated stirring component 5 or the water flow generated in the washing drum 4 along the intermittently rotated stirring component 5. The washings Q are stirred by the mechanical force generated by the intermittently rotated stirring component 5 and the water flow so as to remove dirt from the washings Q, thus the washings Q can be cleaned. In addition, dirt on the washings Q in the washing drum 4 is decomposed by the detergent fed into the washing drum 4. Therefore, the washings Q in the washing drum 4 are also cleaned.

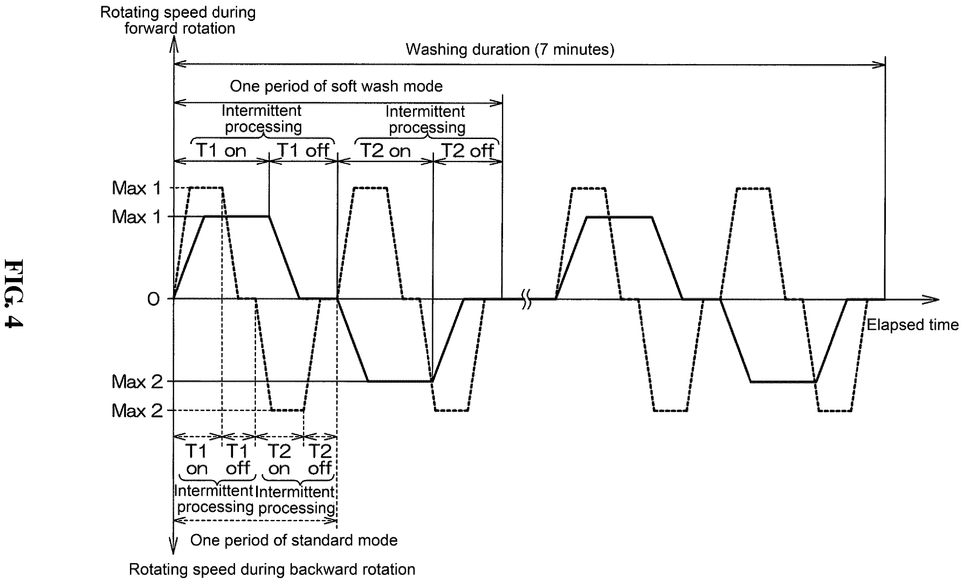

Fig. 4 is a sequence diagram illustrating the rotating speed of the motor 6 in the washing process. In the sequence diagram of Fig. 4, a horizontal axis represents the elapsed time, and a vertical axis represents the rotating speed of the motor 6. The unit of the rotating speed is rpm. In the sequence diagram of Fig. 4, waveforms for displaying time variants of the rotating speed of the motor 6 in the standard mode are expressed by thick dash lines; and waveforms for displaying time variants of the rotating speed of the motor 6 in the soft wash mode are expressed by thick solid lines. A series of flows including the forward rotation of the motor 6, the stop of the forward rotation, the backward rotation of the motor 6, and the stop of the backward rotation constitute a period of intermittent rotation of the stirring component 5 in each mode. It should be noted that, for the forward rotation and the backward rotation, although the rotation direction of the motor 6 is backward, the rotating speed of the motor 6 is a positive value regardless of the rotation direction.

In each period of the intermittent rotation of the stirring component 5 in each of an ordinary mode, the soft wash mode and the delicate mode, a duration in which the motor 6 is operated and rotated forward is referred to as T1on; a following duration in which the motor 6 is not operated and stopped is referred as T1off; a following duration in which the motor 6 is operated and rotated backward is referred as T2on; and a following duration in which the motor 6 is not operated and stopped is referred as T2off. In addition, in each period, the maximum rotating speed of the motor 6 during forward rotation is referred to as Max1, and the maximum rotating speed of the motor 6 during backward rotation is referred to as Max2. The sum of T1on, T1off, T2on and T2off is one period of each mode. The motor 6 is stopped temporarily after starting to steadily rotate at Max1 after accelerating to Max1 through T1on and after reducing the rotating speed to zero through T1off. Then, the motor 6 is stopped temporarily after starting to steadily rotate at Max2 after accelerating to Max2 through T2on and after reducing the rotating speed to zero through T2off.

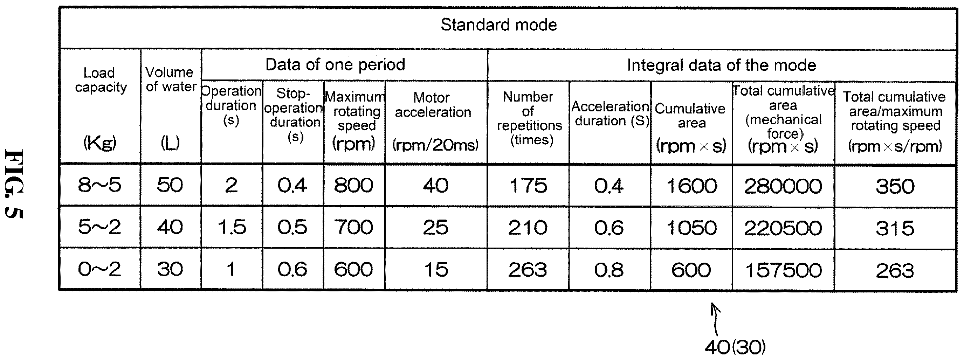

By reference to Fig. 5 showing a table 40 for summarizing data relevant to the washing process in the standard mode, in the standard mode of the present embodiment, T1on and T2on are the same value and are commonly known as the "operation duration"; T1off and T2off are the same value and are commonly known as the "stop-operation duration"; and Max1 and Max2 are the same value and are commonly known as the "maximum rotating speed." The acceleration of the motor 6 when increasing from a stop state to the maximum rotating speed is referred to as "motor acceleration". The unit of each of the operation duration and the stop-operation duration is second (s); and the unit of the motor acceleration is rpm/20ms. The table 40 stores the operation conditions including the volume of water stored in the washing drum 4, the operation duration, the stop-operation duration, the maximum rotating speed and the motor acceleration in the washing process determined in accordance with the load capacity. The unit of the volume of water is liter (L). The operation duration, the stop-operation duration, the maximum rotating speed and the motor acceleration are parameters representing intensity of the water flow in the washing process. The table 40 stores the volume of water and the intensity of the water flow determined in accordance with the load capacity. The microcomputer 30 executes the washing process of the standard mode in the operation conditions corresponding to the load capacity obtained in step S1. It should be noted that the table 40 also stores the operation conditions (not shown) relevant to various processes after the washing process in the washing operation of the standard mode.

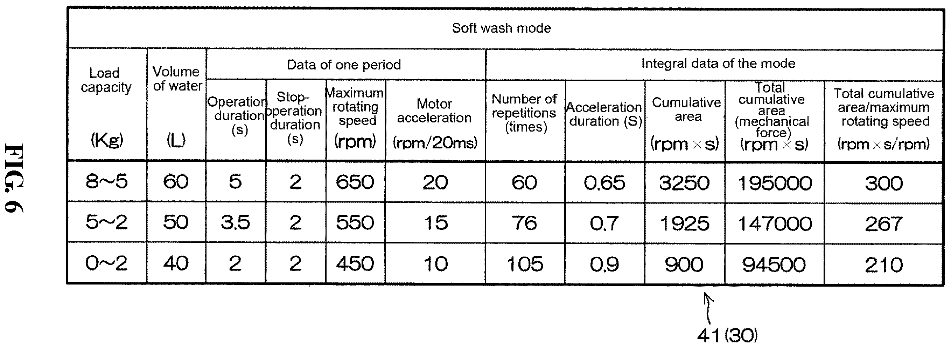

By reference to Fig. 6 showing a table 41 for summarizing data relevant to the washing process in the soft wash mode, in the soft wash mode of the present embodiment, T1on and T2on are the same value and are commonly known as the "operation duration"; T1off and T2off are the same value and are commonly known as the "stop-operation duration"; and Max1 and Max2 are the same value and are commonly known as the "maximum rotating speed." Like the table 40, the table 41 also stores the operation conditions including the volume of water stored in the washing drum 4, the operation duration, the stop-operation duration, the maximum rotating speed and the motor acceleration from the stop state to the maximum rotating speed in the washing process determined in accordance with the load capacity. The microcomputer 30 executes the washing process of the soft wash mode in the operation conditions corresponding to the load capacity obtained in step S1. It should be noted that the table 41 also stores the operation conditions (not shown) relevant to various processes after the washing process in the washing operation of the soft wash mode.

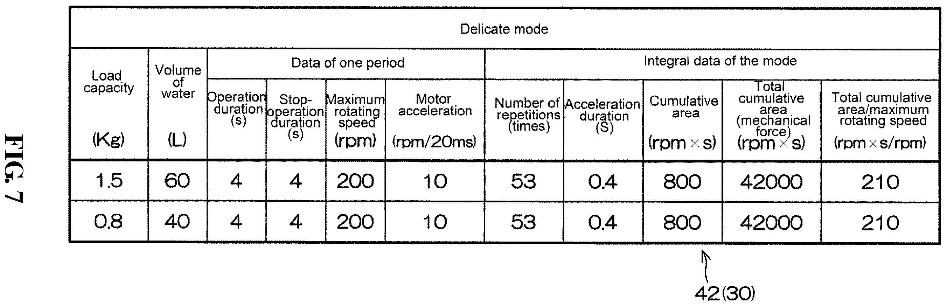

By reference to Fig. 7 showing a table 42 for summarizing data relevant to the washing process in the delicate mode, in the delicate mode, like the table 40 and the table 41, the table 42 also stores the operation conditions including the volume of water stored in the washing drum 4, the operation duration, the stop-operation duration, the maximum rotating speed and the motor acceleration in the washing process determined in accordance with the load capacity. The microcomputer 30 executes the washing process of the delicate mode in the operation conditions corresponding to the load capacity obtained in step S1. It should be noted that the table 42 also stores the operation conditions (not shown) relevant to various processes after the washing process in the washing operation of the delicate mode.

In the washing process, the washing duration in which the stirring component 5 continues to perform intermittent rotation in the present embodiment in any mode is 7 minutes (referring to Fig. 4). In each mode, the sum of the operation duration and the stop-operation duration is a duration required for the rotation of the motor 6 and one intermittent processing formed by the subsequent stop, and is equivalent to one half of one period; and one period consists of one intermittent processing during forward rotation and one intermittent processing during backward rotation (referring to Fig. 4). The number of times of repeating the intermittent processing within 7 minutes, i.e., the number of repetitions, is obtained by transforming 7 minutes into seconds in unit and then dividing by the sum of the operation duration and the stop-operation duration. The duration required for increasing the motor 6 from the stop state to the maximum rotating speed in each intermittent processing process, i.e., an acceleration duration, is calculated by dividing the maximum rotating speed by the motor acceleration, and has a unit of second (s).

In each mode, the rotating speed of the motor 6 is plotted on a trapezoidal waveform (referring to Fig. 4) using the horizontal axis as an upper bottom or a lower bottom during the respective intermittent processing, but for a cumulative area as the area of the trapezoidal portion, each trapezoidal portion can be obtained from the following formula (1). The unit of the cumulative area is rpm × s. Moreover, in the formula (1), as a premise, the acceleration duration is the same as a deceleration duration required for decelerating the motor 6 from the maximum rotating speed to zero after the operation duration.

$$\text{Cumulative area} = ((\text{operation duration} - \text{acceleration duration}) \times \text{maximum rotating speed}) + (\text{acceleration duration} \times \text{maximum rotating speed}) \ldots \text{Formula (1)}$$

In each mode, a value obtained by multiplying the cumulative area obtained in the equation (1) by the number of repetitions is a total cumulative area representing the sum of cumulative areas of all the trapezoidal portions in the washing duration of 7 minutes. It should be noted that the total cumulative area is obtained by integrating a mathematical formula of the waveform representing the rotating speed by using the elapsed time as a variable. The total cumulative area is an index of all the mechanical forces applied to the washings Q in the washing drum 4 because of the intermittent rotation of the stirring component 5 in the washing duration, and is also an index of the cleaning effect of the integral washings Q in the washing process. The greater the total cumulative area is, the better the cleaning effect is. But since the mechanical force is increased, weak washings Q may be damaged.

In each mode, the number of repetitions, the acceleration duration, the cumulative area and the total cumulative area are calculated in accordance with the load capacity. The data can be stored in tables 40-42 (referring to Fig. 5 to Fig. 7). It should be noted that a column on a right end of each of the tables 40-42 stores a value obtained by dividing the total cumulative area by the maximum rotating speed according to the load capacity.

The comparison of the table 40 of the standard mode in Fig. 5 with the table 41 of the soft wash mode based on the same load capacity shows that the volume of water in the soft wash mode is over 10% more than that in the standard mode regardless of the load capacity. In addition, for the data of one period of the intermittent rotation of the stirring component 5, the operation duration of the soft wash mode is over 1 second longer than that of the standard mode regardless of the load capacity. In addition, the stop-operation duration of the soft wash mode is over 1 second longer than that of the standard mode regardless of the load capacity. The maximum rotating speed of the soft wash mode is lower than that of the standard mode regardless of the load capacity, and is greater than 50% and less than 90% of the maximum rotating speed of the standard mode. The motor acceleration of the soft wash mode is over 10% lower than that of the standard mode regardless of the load capacity. Thus, regardless of the load capacity, the number of repetitions of the soft wash mode is less than that of the standard mode.

The maximum load capacity of the delicate mode is 1.5 kg. The comparison of the table 41 of the soft wash mode in Fig. 6 with the table 42 of the delicate mode in Fig. 7 based on the same load capacity shows that the volume of water of the delicate mode is higher than that of the soft wash mode and the standard mode in the case of the load capacity of 1.5 kg. For the data of one period of the intermittent rotation of the stirring component 5, the operation duration of the delicate mode is over 1 second longer than that of the soft wash mode in the case of the load capacity below 1.5 kg. In addition, the stop-operation duration of the delicate mode is about 2 seconds longer than that of the soft wash mode in the case of the load capacity below 1.5 kg. The maximum rotating speed of the delicate mode is 200 rpm regardless of the load capacity, and is over 50% lower than that of the soft wash mode. Moreover, the maximum rotating speed of 200 rpm of the delicate mode is a value determined in a manner of being low to an extent that the water flow is just generated without damaging the washings Q. The motor acceleration of the delicate mode is below the motor acceleration of the soft wash mode regardless of the load capacity.

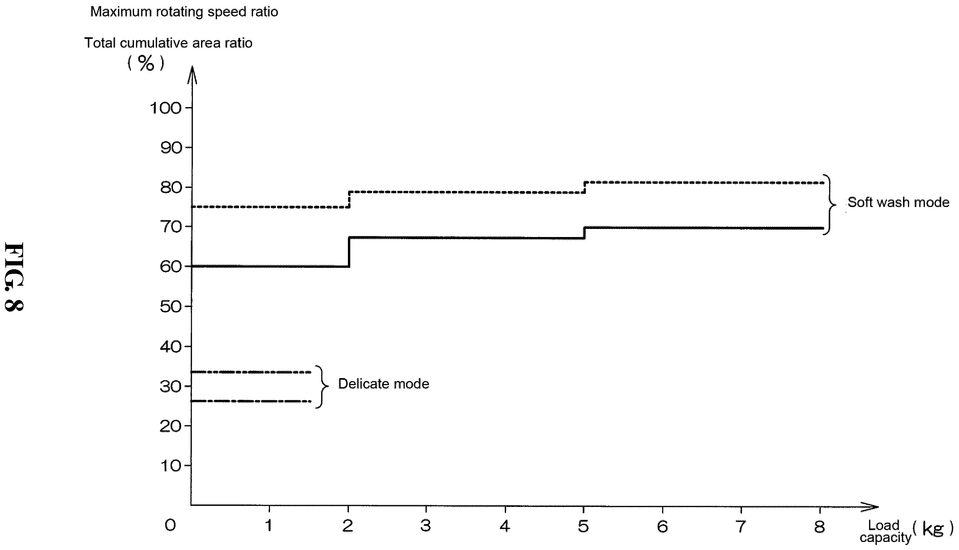

Fig. 8 is a graph illustrating a relationship between a load capacity and each of a total cumulative area ratio and a maximum rotating speed ratio in the washing process. In the graph of Fig. 8, a horizontal axis represents the load capacity; and the vertical axis represents a total cumulative area ratio and a maximum rotating speed ratio. The total cumulative area ratio is expressed by % and is a ratio of the total cumulative area of each of the delicate mode and the soft wash mode to that of the standard mode when the total cumulative area of the standard mode is 100%. The maximum rotating speed ratio is expressed by % and is a ratio of the maximum rotating speed of each of the delicate mode and the soft wash mode to that of the standard mode when the maximum rotating speed of the standard mode is 100%.

By reference to Fig. 8, an index representing a load on the washings Q based on the cleaning effect and the mechanical force, i.e., the maximum total cumulative area, shown as a dashed line in the delicate mode is only about 30% of that in the standard mode in the case of the load capacity below 1.5 kg. In addition, the maximum rotating speed shown as a two-dot dash line in the delicate mode is only about 35% of that in the standard mode in the case of the load capacity below 1.5 kg. In other words, the maximum rotating speed of the motor 6 in the washing process of the delicate mode is set to be lower than that in the standard mode in the case of comparison based on the same load capacity. In the case of the delicate washings Q, the situation of damage during the washing operation can be inhibited, and the cleaning is performed efficiently through the delicate mode with weak mechanical force. In the delicate mode, the washings Q are cleaned by being gently pushed by the stirring component 5 rotating at the low speed in a state of being soaked in the water stored in the washing drum 4. When the washings are soft delicate washings Q, although the washings can be effectively cleaned without damage in the delicate mode, a good washing effect as the delicate washings Q is difficult to be obtained even if the washings Q as the objects in the soft wash mode are washed in the delicate mode.

A goal of the soft wash mode is to wash the object washings Q more gently than the standard mode and more effectively than the delicate mode. Therefore, the total cumulative area shown as the solid line is set to be kept in a range greater than 50% and less than 90% of the standard mode in such a manner that the goal can also be achieved even if the washing duration is also 7 minutes as other modes; and the operation conditions including the operation duration, the stop-operation duration, the maximum rotating speed and the motor acceleration can be calculated by inverse calculation according to the total cumulative area. Thus, the maximum rotating speed shown as the dashed line is set to be kept in a range greater than 50% and less than 90% of the standard mode. Preferably, in the soft wash mode, the above goal can be achieved reliably as long as the maximum rotating speed ratio is below 90% and the total cumulative area ratio is above 50%.

According to the above, in the washing machine 1, for the non-delicate washings Q which may be damaged when being washed in the standard mode but cannot be washed effectively when being washed in the delicate mode, the soft wash mode different from the standard mode and the delicate mode can be selected. The microcomputer 30 rotates the stirring component 5 intermittently in the operation conditions (referring to Fig. 6) special for the soft wash mode in the washing process of the soft wash mode in the case of receiving the selection of the soft wash mode.

Specifically, by reference to Fig. 5 to Fig. 7, the volume of water in the washing drum 4 is set to be higher than that in the standard mode in the case of comparison based on the same load capacity under the operation conditions of the washing process of the soft wash mode. Thus, in the washing drum 4, the washings can be inhibited from rubbing against each other due to a large amount of accumulated water, thereby inhibiting the damage to the washings Q. In addition, under the operation conditions of the washing process of the soft wash mode, since the maximum rotating speed of the motor 6 is lower than that in the standard mode and is higher than that in the delicate mode in the case of comparison based on the same load capacity, the mechanical force applied to the washings Q is weaker than that in the standard mode and stronger than that in the delicate mode. Thus, possible damages to the washings Q in the standard mode can be inhibited, and the washings Q can be cleaned more efficiently than the delicate mode. It should be noted that in the soft wash mode, the lowest maximum rotating speed is preferably about 450 rpm (referring to Fig. 6) in order to generate relatively strong water flow for effectively stirring the washings Q.

In addition, under the operation conditions of the washing process of the soft wash mode, the duration in which the motor 6 is rotated in each period in which the stirring component 5 is rotated intermittently, i.e., the operation duration, is longer than that in the standard mode in the case of comparison based on the same load capacity. Thus, the washings Q in the washing drum 4 are promoted to be exchanged with each other in position by the rotation of the stirring component 5 in relatively long operation duration. Thus, the washings Q can be cleaned efficiently.

In addition, under the operation conditions of the washing process of the soft wash mode, the duration in which the motor 6 stops rotating in each period in which the stirring component 5 is rotated intermittently, i.e., the stop-operation duration, is longer than that in the standard mode in the case of comparison based on the same load capacity. Thus, the mechanical force applied to the washings Q is weaker than that in the standard mode. In addition, a detergent can be effectively permeated to the washings Q in such a prolonged stop-operation duration. Therefore, the situation that the washings Q are damaged can be inhibited, and the washings Q can be cleaned efficiently through the washing process of the soft wash mode.

In addition, under the operation conditions of the washing process of the soft wash mode, the acceleration of the motor 6 is lower than that in the standard mode until the maximum rotating speed of each period in which the stirring component 5 is rotated intermittently, i.e., the motor acceleration, in the case of comparison based on the same load capacity. Thus, the mechanical force applied to the washings Q in an acceleration process of the motor is weaker than that in the standard mode. Therefore, the situation that the washings Q are damaged can be inhibited through the washing process of the soft wash mode.

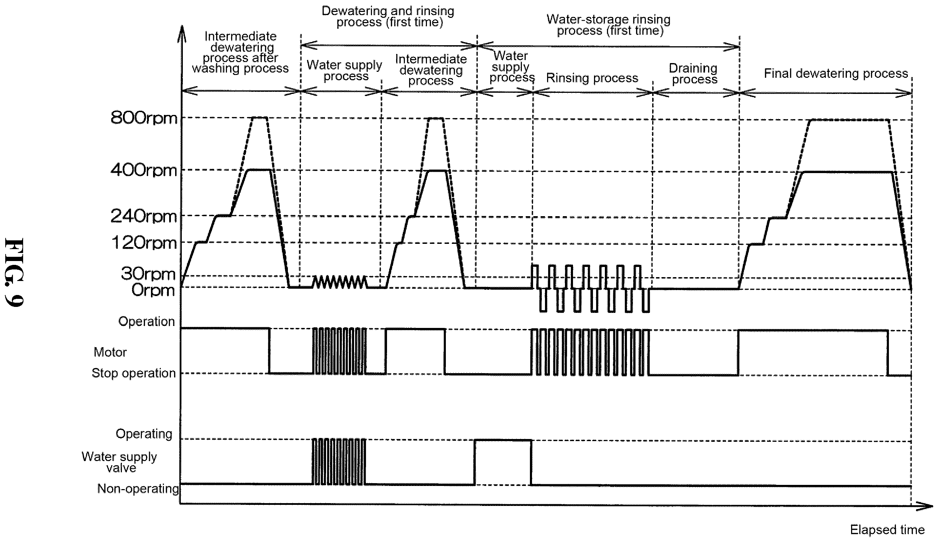

By reference to Fig. 3, in any mode, when the washing duration is elapsed, the microcomputer 30 stops rotating the motor 6 to stop the rotation of the stirring component 5 and opens the drain valve 19. Thus, the water stored in the washing drum 4 is discharged out of the machine from the drainage path 18 of the outer drum 3; and the washing process in step S2 is ended. It should be noted that a stage at which the washing process is ended is in a state in which water dissolved with the detergent as the detergent water is permeated to the washings Q. The washing operation is described below by reference to the sequence diagram of Fig. 9. In the sequence diagram of Fig. 9, a horizontal axis represents the elapsed time; and a vertical axis represents the rotating speed of the motor 6, the operation/stop-operation state of the motor 6 and the operating/non-operating state of the water supply valve 14 sequentially from the top.

The microcomputer 30 executes the intermediate dewatering process immediately (step S3) after the washing process. In the intermediate dewatering process, the microcomputer 30 controls the rotation of the motor 6 in such a manner of keeping the drain valve 19 opened, so that the washing drum 4 and the stirring component 5 are rotated integrally. Since the centrifugal force is applied to the washings Q in the washing drum 4 by the rotation of the washing drum 4 and the stirring component 5, the washings Q are dewatered. The water exuding from the washings Q through dewatering is discharged out of the machine from the drainage path 18 of the outer drum 3.

The intermediate dewatering process is described in detail. The microcomputer 30 stably rotates the motor 6 at a low speed of 120 rpm after accelerating the motor 6 from 0 rpm to a first rotating speed of 120 rpm. The first rotating speed is higher than the rotating speed (for example, 50 rpm to 60 rpm) at which the washing drum 4 generates transverse resonance, and is lower than the rotating speed (for example, 200 rpm to 220 rpm) at which the washing 4 generates longitudinal resonance. After the stable rotation at 120 rpm, the microcomputer 30 rotates the motor 6 at a low speed of 240 rpm after accelerating the motor 6 from 120 rpm to a second rotating speed of 240 rpm. The second rotating speed is slightly higher than the rotating speed of the longitudinal resonance. Then, the microcomputer 30 rotates the motor 6 at the maximum rotating speed after accelerating the motor 6 from 240 rpm to the maximum rotating speed of 400 rpm or 800 rpm.

In other words, in the intermediate dewatering process, the microcomputer 30 accelerates the rotation of the motor 6 at three stages including a first acceleration stage from 0 rpm to 120 rpm, a second acceleration stage from 120 rpm to 240 rpm and a third acceleration stage from 240 rpm to the maximum rotating speed. Unlike such a case, when the motor 6 is directly accelerated from 0 rpm to the maximum rotating speed without a break, since a large amount of water is exuded from the washings Q at a time, a drainage state of the drainage path 18 may get worse, or bubbles may be reserved in the drainage path 18. However, in the present embodiment, since the motor 6 is accelerated at stages in such a manner that a large amount of water is not exuded from the washings Q at a time, such a bad condition can be prevented. The microcomputer 30 closes the drain valve 19 after applying brake to the rotation of the motor 6 to stop the rotation of the motor 6 at the end of the intermediate dewatering process. The brake herein can be achieved in such a manner that the microcomputer 30 controls the duty ratio to rapidly stop the rotation of the motor 6, or a brake device (not shown) is arranged additionally and is operated by the microcomputer 30 to rapidly stop the rotation of the motor 6.

The microcomputer 30 executes the water supply process immediately (step S4) after the intermediate dewatering process. In the water supply process, the microcomputer 30 intermittently rotates the washing drum 4 at an ultralow speed by alternately and repeatedly operating the motor 6 so that the motor is driven and stopped due to stop-operation. Specifically, the rotating speed of the motor 6 is alternately and repeatedly changed in manners of increasing from 0 rpm to 30 rpm and decreasing from 30 rpm to 0 rpm.

30 rpm herein is an example. In summary, the rotating speed of the motor 6 in the water supply process is just required to be lower than the minimum rotating speed at which the washing drum 4 resonates. Although the minimum rotating speed is different based on the size of the washing drum 4, the rotating speed at which the washing drum 4 generates the transverse resonance is 50 rpm to 60 rpm in the present embodiment.

In addition, in the water supply process, the microcomputer 30 intermittently supplies water to the washing drum 4 by alternately and repeatedly opening the water supply valve 14 for operating and closing the water supply valve 14 for not operating. The time of operating/non-operating of the water supply valve 14 coincides with the time of operation/stop-operation of the motor 6. Therefore, the water supply valve 14 is also operated when the motor 6 is operated; and the supply valve 14 is also not operated when the motor 6 stops rotation. In the water supply process, since intermittent rotation and intermittent water supply of the washing drum 4 are performed at the same time, the washings Q in the washing drum 4 are soaked by the water from the water supply path 13 when the washing drum 4 is rotated at the ultra-low speed. At this time, the water from the water supply path 13 is supplied to the above washings Q in a manner of splashing water. The supply of the water like the splashing water is called "splashing water supply". In the water supply process, since a small amount of the water is supplied to the washing drum 4 to the extent that the washings Q are soaked, almost no water is stored in the washing drum 4.

The microcomputer 30 performs the intermediate dewatering process with the same contents as the step S3 again immediately (step S5) after the water supply process. Through the intermediate dewatering process herein, the washings Q in the washing drum 4 are centrifugally dewatered, thereby throwing out and removing the detergent water permeating to the washings Q together with the water supplied in the water supply process.

The water supply process in step S4 and the following intermediate dewatering process in the step S5 performed immediately after the water supply process constitute one dewatering and rinsing process. The dewatering and rinsing process is one of the rinsing processes. It should be noted that in the dewatering and rinsing process, although the washing 4 is rotated, the stirring component 5 is in a stationary state.

The microcomputer 30 executes the water-storage rinsing process immediately (step S6) after the dewatering and rinsing process. The water-storage rinsing process is one of the rinsing processes. As the water supply process at an initial stage of the water-storage rinsing process, the microcomputer 30 continuously opens the water supply valve 14 for specified duration to supply the water to the washing drum 4 when the drain valve 19 is closed. When the water is stored to, for example, the specified water level at which the washings Q are located at the lower side Z2, in the washing drum 4, the microcomputer 30 closes the water supply valve 14 and stops the water supply.

Then, the microcomputer 30 drives the motor 6 at the specified duration, as the rinsing process of the water-storage rinsing process, in such a state that the water is stored to the specified water level in the washing drum 4, so that the stirring component 5 is rotated intermittently. In such a water-storage rinsing process, the washings Q in the washing drum 4 are stirred by the blades 5A of the rotating stirring component 5 in the state of being soaked in water and then are rinsed. Then, the microcomputer 30 stops the driving of the motor 6 and opens the drain valve 19. Thus, the water stored in the washing drum 4 is discharged out of the machine from the drainage path 18 of the outer drum 3 as the drainage process at a final stage of the water-storage rinsing process. At the stage that the water-storage rinsing process is ended, the washings Q are in a state of being completely rinsed, and almost no detergent component exists in the washings Q.

The microcomputer 30 executes the final dewatering process immediately (step S7) after the water-storage rinsing process. In the final dewatering process, the microcomputer 30 drives the motor 6 for the specified duration in a manner of keeping opening the drain valve 19, so that the washing drum 4 and the stirring component 5 are rotated integrally. Although the contents of the final dewatering process are substantially the same as those of the intermediate dewatering processes in step S3 and step S5, in the final dewatering process, the duration when the motor 6 is stably rotated at the maximum rotating speed after the third acceleration stage is longer than that in the intermediate dewatering process. In the final dewatering process, the microcomputer 30 accelerates the rotation of the motor 6 at the three stages including the first acceleration stage, the second acceleration stage and the third acceleration stage. Thus, since the centrifugal force is applied to the washings Q in the washing drum 4, the washings Q are fully dewatered. The water exuding from the washings Q by dewatering is discharged out of the machine from the drainage path 18 of the outer drum 3. The final dewatering process is ended, so the washing operation in each mode is ended.

As described above, the microcomputer 30 performs the washing operation by supplying the water to the washing drum 4, or performing drainage of the washing drum 4 or controlling the rotation of the motor 6 to rotate the washing drum 4 and the stirring component 5.

Moreover, the maximum rotating speed in the dewatering process of each of the intermediate dewatering process and the final dewatering process is 800 rpm in the standard mode (referring to the thick dashed line in Fig. 9) and 400 rpm in the soft wash mode (referring to the thick solid line in Fig. 9). Thus, the microcomputer 30 accelerates the rotation of the motor 6 in three stages respectively in the intermediate dewatering process and the final dewatering process, but in the soft wash mode, unlike the standard mode, the microcomputer 30 does not accelerate the rotation of the motor 6 besides accelerating the motor 6 from 240 rpm to 400 rpm at the third acceleration stage. Therefore, in the case of the soft wash mode, the microcomputer 30 rotates the motor 6 stably at an intermediate speed of 400 rpm after the third acceleration stage. In this way, the microcomputer 30 rotates the washing drum 4 in the dewatering process of the soft mode in an operation condition that the maximum rotating speed of the motor 6 is lower than that in the standard mode. In this case, the force applied to washings Q during the rotation of the motor 6 in the dewatering process is weaker than that in the standard mode. Therefore, the situation that the washings Q are damaged is inhibited by the dewatering process of the soft wash mode. However, the contents of the intermediate dewatering process and the final dewatering process are the same as those in the soft wash mode and the standard mode except that the motor 6 is accelerated from 240 rpm to 400 rpm in the third acceleration stage.

The present invention is not limited to the above-described embodiments, and can be subjected to various changes within a scope recorded in claims.

For example, in the above embodiments, the series of flows including alternate repetition of the forward rotation and the backward rotation of the motor 6, the forward rotation, the stop of the forward rotation, the backward rotation and the stop of the backward rotation in the washing process of each mode constitute one period of the intermittent rotation of the stirring component 5 (referring to Fig. 4). Definition of one period herein is just an example, so one intermittent processing consisting of flows including the forward rotation and the stop of the forward rotation can also be considered as one period, and one intermittent processing consisting of flows including the subsequent backward rotation and the stop of the backward rotation is considered as a next one period. In addition, the forward rotation and the backward rotation can also be not repeated alternately, but any one of the forward rotation and the backward rotation is performed only repeatedly.

In addition, in the above embodiments, although T1on and T2on are the same value and T1off and T2off are the same value, T1on and T2on may be different values or T1off and T2off may be different values. Similarly, Max1 and Max2 can also be different values.

In addition, in the washing operation of each mode, the number of times of the dewatering and rinsing process and the water-storage rinsing process can be changed arbitrarily.

In addition, in the washing machine 1, the central axis 20 of the outer drum 3 and the washing drum 4 is configured in a manner of extending towards the inclination direction K (referring to Fig. 1), but can also be configured in a manner of extending towards the up-down direction Z.

List of reference numerals

1: Washing machine; 4: Washing drum; 5: Stirring component; 6: Motor; 10A: Operation part; 30: Microcomputer; Q: Washings.

## Claims

1. A washing machine, comprising:

   a washing drum, for accommodating washings;
   a stirring component, which is rotatable and is for stirring washings in the washing drum;
   a motor, for rotating the stirring component;
   an execution unit, for supplying water to the washing drum or controlling rotation of the motor to rotate or stop the stirring component, wherein the execution unit executes a washing operation comprising a washing process in which the stirring component is rotated periodically and intermittently in such a state that water is stored in the washing drum; and
   a receiving unit, for receiving selection of a plurality of modes set in the washing operation,
   wherein the plurality of modes comprise a standard mode and a delicate mode; a maximum rotating speed of the motor in the washing process in the delicate mode is set to be lower than a maximum rotating speed in the standard mode so as to wash washings more delicate than washings washed in the standard mode; and
   when the receiving unit receives selection of a specified mode different from the standard mode and the delicate mode in the plurality of modes, the execution unit rotates the stirring component intermittently in the washing process of the specified mode in operation conditions that volume of water in the washing drum is greater than volume of water in the standard mode, the maximum rotating speed of the motor is lower than the maximum rotating speed in the standard mode and higher than a maximum rotating speed in the delicate mode, and a duration, in which the motor is rotated in each period in which the stirring component is rotated intermittently, is longer than a duration in the standard mode.

2. The washing machine according to claim 1, wherein
   the execution unit rotates the stirring component intermittently in the washing process of the specified mode in an operation condition that a duration, in which the motor stops rotating in each period in which the stirring component is rotated intermittently, is longer than a duration in the standard mode.

3. The washing machine according to claim 1 or 2, wherein
the execution unit rotates the stirring component intermittently in the washing process of the specified mode in an operation condition that an acceleration of the motor is lower than an acceleration in the standard mode until the maximum rotating speed of each period in which the stirring component is rotated intermittently.

4. The washing machine according to any one of claims 1-3, wherein
the washing drum is rotatable, and the motor is capable of rotating the washing drum;
the washing operation comprises a dewatering process that the execution unit controls rotation of the motor to rotate the washing drum after the washing process; and
the execution unit rotates the washing drum in the dewatering process of the specified mode in an operation condition that the maximum rotating speed of the motor is lower than the maximum rotating speed in the standard mode.

EP 3 276 065 A1

**FIG. 1**

**FIG. 2**

FIG. 3

**FIG. 4**

| Load capacity (Kg) | Volume of water (L) | Data of one period | | | | | Integral data of the mode | | | |
|---|---|---|---|---|---|---|---|---|---|---|
| | | Operation duration (s) | Stop-operation duration (s) | Maximum rotating speed (rpm) | Motor acceleration (rpm/20ms) | Number of repetitions (times) | Acceleration duration (S) | Cumulative area (rpm×s) | Total cumulative area (mechanical force) (rpm×s) | Total cumulative area/maximum rotating speed (rpm×s/rpm) |
| 8~5 | 50 | 2 | 0.4 | 800 | 40 | 175 | 0.4 | 1600 | 280000 | 350 |
| 5~2 | 40 | 1.5 | 0.5 | 700 | 25 | 210 | 0.6 | 1050 | 220500 | 315 |
| 0~2 | 30 | 1 | 0.6 | 600 | 15 | 263 | 0.8 | 600 | 157500 | 263 |

Standard mode

40(30)

**FIG. 5**

**FIG. 6**

| | | Soft wash mode | | | | | | | | |
|---|---|---|---|---|---|---|---|---|---|---|
| Load capacity (Kg) | Volume of water (L) | Data of one period | | | | Integral data of the mode | | | | |
| | | Operation duration (s) | Stop-operation duration (s) | Maximum rotating speed (rpm) | Motor acceleration (rpm/20ms) | Number of repetitions (times) | Acceleration duration (S) | Cumulative area (rpm×s) | Total cumulative area (mechanical force) (rpm×s) | Total cumulative area/maximum rotating speed (rpm×s/rpm) |
| 8~5 | 60 | 5 | 2 | 650 | 20 | 60 | 0.65 | 3250 | 195000 | 300 |
| 5~2 | 50 | 3.5 | 2 | 550 | 15 | 76 | 0.7 | 1925 | 147000 | 267 |
| 0~2 | 40 | 2 | 2 | 450 | 10 | 105 | 0.9 | 900 | 94500 | 210 |

41 (30)

**Delicate mode**

| Load capacity (Kg) | Volume of water (L) | Data of one period | | | | | | Integral data of the mode | | |
|---|---|---|---|---|---|---|---|---|---|---|
| | | Operation duration (s) | Stop-operation duration (s) | Maximum rotating speed (rpm) | Motor acceleration (rpm/20ms) | Number of repetitions (times) | Acceleration duration (S) | Cumulative area (rpm×s) | Total cumulative area (mechanical force) (rpm×s) | Total cumulative area/maximum rotating speed (rpm×s/rpm) |
| 1.5 | 60 | 4 | 4 | 200 | 10 | 53 | 0.4 | 800 | 42000 | 210 |
| 0.8 | 40 | 4 | 4 | 200 | 10 | 53 | 0.4 | 800 | 42000 | 210 |

42(30)

**FIG. 7**

**FIG. 8**

**FIG. 9**

# INTERNATIONAL SEARCH REPORT

| | International application No. |
|---|---|
| | PCT/CN2016/077121 |

## A. CLASSIFICATION OF SUBJECT MATTER

D06F 33/02 (2006.01) i; D06F 33/00 (2006.01) i

According to International Patent Classification (IPC) or to both national classification and IPC

## B. FIELDS SEARCHED

Minimum documentation searched (classification system followed by classification symbols)

D06F

Documentation searched other than minimum documentation to the extent that such documents are included in the fields searched

Electronic data base consulted during the international search (name of data base and, where practicable, search terms used)

CNABS; CNTXT; EPODOC; WPI: bucket, drum, slot, material, texture, rapid wear, period, time, highest, maximum, fastest, wash+, speed, rate, pace, revolution, water, rotat+, running, rolling, damag+, deform+, break+, destro+, demolish+, rapid, laundry, cloth+, wearing, garment, textile, fabric?, mode

## C. DOCUMENTS CONSIDERED TO BE RELEVANT

| Category* | Citation of document, with indication, where appropriate, of the relevant passages | Relevant to claim No. |
|---|---|---|
| X | CN 101935933 A (NANJING LG PANDA APPLIANCES CO., LTD.), 05 January 2011 (05.01.2011), description, paragraphs [0010]-[0011], [0026]-[0184] and [0198]-[0199], and figures 1-6 | 1-4 |
| A | JP 63206280 A (TOSHIBA CORP et al.), 25 August 1998 (25.08.1988), the whole document | 1-4 |
| A | CN 103290650 A (BSH ELECTRICAL APPLIANCES (JIANGSU) CO., LTD.), 11 September 2013 (11.09.2013), the whole document | 1-4 |
| A | CN 101994227 A (HAIER ELECTRONICS GROUP CO., LTD. et al.), 30 March 2011 (30.03.2011), the whole document | 1-4 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 May 2016 (26.05.2016) | 03 June 2016 (03.06.2016) |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer ZHANG, Zhen Telephone No.: (86-10) 62084588 |

Form PCT/ISA/210 (second sheet) (July 2009)

## INTERNATIONAL SEARCH REPORT
### Information on patent family members

| | International application No. |
|---|---|
| | **PCT/CN2016/077121** |

| Patent Documents referred in the Report | Publication Date | Patent Family | Publication Date |
|---|---|---|---|
| CN 101935933 A | 05 January 2011 | KR 20110022291 A | 07 March 2011 |
| | | CN 101935933 B | 04 July 2012 |
| JP 63206280 A | 25 August 1988 | None | |
| CN 103290650 A | 11 September 2013 | None | |
| CN 101994227 A | 30 March 2011 | CN 101994227 B | 04 June 2014 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4003998 A